Europäisches Patentamt

European Patent Office

Office européen des brevets

(19)

(11) Numéro de publication: **0 082 066**
**B1**

(12) # FASCICULE DE BREVET EUROPÉEN

(45) Date de publication du fascicule du brevet:
**13.08.86**

(51) Int. Cl.⁴: **B 65 D 43/04,** B 21 D 51/46

(21) Numéro de dépôt: **82402241.2**

(22) Date de dépôt: **07.12.82**

(54) **Dispositif d'étanchéité pour emballage métallique, procédé pour sa fabrication et emballage en comportant application.**

(30) Priorité: **14.12.81 FR 8123266**

(43) Date de publication de la demande:
**22.06.83 Bulletin 83/25**

(45) Mention de la délivrance du brevet:
**13.08.86 Bulletin 86/33**

(84) Etats contractants désignés:
**BE DE GB IT LU NL**

(56) Documents cité:
**BE-A-674 981**
**FR-A-1 381 587**
**FR-A-2 340 189**
**FR-E-68 101**

(73) Titulaire: **SAFET- EMBAMET LETHIAS Société
dite:, 54 Avenue du Maréchal Leclerc, F-92390
Villeneuve- la- Garenne (FR)**

(72) Inventeur: **Groult, Jacques, Rue du Pont- Fort,
F-27130 Verneuil/Avre (FR)**

(74) Mandataire: **Bressand, Georges, c/o CABINET
LAVOIX 2 Place d'Estienne d'Orves, F-75441
Paris Cedex 09 (FR)**

EP 0 082 066 B1

LIBER, STOCKHOLM 1986

# Description

La présente invention concerne d'une façon générale les emballages métalliques destinés à contenir des produits dont la nature nécessite une barrière très efficace contre les fuites, et elle est plus particulièrement relative à un dispositif de fermeture hermétique résistant aux chocs pour de tels emballages.

Dans la plupart des emballages métalliques, notamment en fer blanc comportant un couvercle, par exemple les boîtes de peinture, ce couvercle de forme circulaire est habituellement embouti, présente une partie centrale bombée ou non et comporte sur sa périphérie un rebord replié de façon à former une surface externe cylindrique s'étendant axialement dont le bord libre dirigé vers le haut est habituellement roulé, l'ensemble présentant une rigidité élevée.

La surface externe cylindrique de ce couvercle est adaptée pour être ajustée dans l'ouverture prévue à l'extrémité supérieure de la boîte constituant l'emballage et qui présente une surface cylindrique axiale qui coopère à force avec ladite surface cylindrique du couvercle (FR-E 86 101, BE-A-674 981 et FR-A-1 381 587).

Cette surface cylindrique axiale de l'ouverture de la boîte est habituellement formée sur la périphérie interne d'un rebord constitué de façon classique d'un embouti annulaire présentant au moins un repli et serti sur le bord de l'ouverture de la boîte.

Cette pièce annulaire formant un rebord radial intermédiaire ainsi rapporté sur la périphérie de l'ouverture de la boîte confère à celle-ci une rigidité élevée telle que lorsque l'emballage tombe sur le sol la périphérie de son ouverture est suffisamment résistante et le couvercle n'est pas chassé de son logement.

L'utilisation relativement recente d'une technique nouvelle de fabrication des boîtes en fer blanc, suivant laquelle la couture longitudinale soudée ou sertie des deux bords de la feuille constituant la paroi de la boîte est remplacée par une jonction bord à bord par soudage par micro-points permet de fabriquer des boîtes plus économiques, et cette économie pourrait encore être accrue en supprimant le rebord annulaire radial interne, qui doit être serti sur l'extrémité ouverte de l'emballage et nécessite de la matière première et de la main d'oeuvre pour effectuer les nombreuses opérations nécessaires.

L'emploi de cette technique de jonction sans surépaisseur pourrait permettre une telle économie, en emboîtant un couvercle classique dans l'ouverture de la boîte dont le bord serait simplement roulé.

Ceci pose cependant un problème, dû au fait que la périphérie de l'ouverture de la boîte est alors beaucoup moins rigide, de sorte qu'en cas de choc, si la boite tombe par exemple sur le sol, le couvercle se détache.

L'insertion d'une garniture d'étanchéité en matière élastomère entre la paroi latérale externe du couvercle et la paroi interne de la boîte n'est pas satisfaisante car pour retenir le couvercle en cas de choc dû à une chute, la compression nécessaire implique une epaisseur telle que la garniture est arrachée lors de la mise en place à force du couvercle.

On a également tente, dans de tels emballages, de disposer un joint en une matière élastomère contre un epaulement externe de la surface latérale du couvercle, cette garniture étant destinée à être serrée entre cet epaulement et le rebord de la paroi de la boîte.

Cet agencement ne permet d'assurer l'étanchéité que dans la mesure ou le rebord extérieur du couvercle est replié en prise avec le rebord externe de la boîte afin de maintenir la garniture sous serrage.

En outre, la matière élastomère utilisée pour ces joints doit être inerte vis-à-vis du contenu de l'emballage et ne pas être attaquée ou détruite par ce contenu et ne doit pas non plus contaminer ces produits, par exemple dans le cas de produits alimentaires.

Aucune de ces solutions n'a donc permis de réaliser de tels emballages capables de résister aux tests sévères de résistance aux chocs qui sont actuellement imposés,

Au sujet des documents antérieurs precités illustrant l'état de la technique, il convient également de formuler les remarques ci-dessous.

Le joint du FR-E-86101 a une section partiellement conique et la gorge servant de logement à ce joint est située juste sous le bord supérieur recourbé du couvercle, de sorte qu'il est inévitablement endommagé par l'outil utilisé pour exécuter les ouvertures successives du récipient. Il en résulte que le joint du FR-E-86101 peut à la longue se détacher du couvercle.

En outre, le matériau utilisé pour ce joint, constitué par du caoutchouc ou par une matière plastique se présentant sous une consistance très souple, se délite au fur et à mesure de son utilisation. Il est également peu adhérent et friable.

Le brevet BE-A-674 981 décrit un joint torique réalisé en caoutchouc naturel ou synthétique ou en une matière plastique appropriée telle que du polystyrène (page 3). De plus, ce joint est rapporté par simple glissement sur le couvercle, sur lequel il est retenu par élasticité. De ce fait, son adhérence au couvercle s'est révélée dans la pratique insuffisante, de sorte que contrairement à ce qui est indiqué à la page 5, paragraphe 2, ce joint ne conserve pas intégralement son efficacité après un nombre élevé d'opérations de fermetures et d'ouvertures du récipient.

Ces remarques s'appliquent également au joint torique divulgué par le document FR-A-1 381 587 qui prévoit un joint torique en caoutchouc ou en une matière élastiquement déformable fixée par collage.

L'invention a pour but de remédier à ces divers inconvénients en réalisant un emballage en métal comportant un dispositif d'etanchéité et de maintien du couvercle extrêmement fiable, de fabrication économique et pouvant assurer l'étanchéité sans moyen de serrage pendant toute la durée d'utilisation de l'emballage et capable de résister aux tests de chocs.

L'invention a pour objet à cet effet un dispositif d'étanchéité pour emballage métallique cylindrique à ouverture totale, du type dans lequel un joint torique est logé dans une gorge de forme correspondante du couvercle ou de l'emballage et comprenant un conteneur et un couvercle embouti et dans lequel la surface périphérique interne de l'ouverture du conteneur, dépourvue de rebord radial interne, coopère directement avec la surface cylindrique externe dudit couvercle, caractérisé en ce qu'il comprend au moins un joint de forme partiellement torique, réalisé en une résine co-polyamide synthétisée par polycondensation de mono et polyacides, avec polyamines aliphatiques et cycliques, ce joint étant collé in-situ par depôt à chaud dans au moins une gorge circulaire prévue dans la region du conteneur et/ou du couvercle dans laquelle se produit un frottement entre les parties coopérant ensemble de la paroi interne de l'ouverture du conteneur et de la paroi périphérique externe du couvercle lors de la mise en place et de l'enlèvement du couvercle.

Suivant un premier mode de réalisation de l'invention la surface externe de la paroi du conteneur comporte dans ladite région de frottement deux gorges adjacentes contenant chacune un joint.

Suivant l'invention également, le procédé de fabrication du dispositif d'étanchéité précité est caractérisé en ce qu'on dépose à chaud un cordon de ladite résine copolyamide dans la (les) gorge(s) agencée(s) dans l'un et/ou l'autre des eléments de l'emballage préalablement chauffés à une temperatur légèrement inférieure à celle de ladite résine et en faisant simultanément tourner ledit élément autour de son axe placé horizontalement de façon que la(les) gorge(s) tourne(nt) dans un plan vertical.

D'autres caractéristiques et avantages de l'invention apparaîtront au cours de la description qui va suivre faite en se référant au dessin annexé donné uniquement à titre d'exemple et dans lequel:

- la Fig. 1 est une vue en élévation latérale d'une boîte d'emballage en fer blanc comportant un dispositif de fermeture et d'étanchéité suivant l'invention;

- la Fig. 2 est une vue partielle à plus grande échelle montrant l'agencement relatif du couvercle et de la paroi supérieure de la boîte dans un mode de réalisation dans lequel la paroi comporte deux gorges contenant chacune un joint.

- la Fig. 3 est une vue partielle analogue à celle de la Fig. 2 d'un autre mode de réalisation dans lequel le couvercle comporte deux gorges contenant chacune un joint;

- la Fig. 4 est une vue analogue à celle de la Fig. 3 d'un troisième mode de réalisation, dans lequel le couvercle et la boîte comportent chacun une gorge contenant un joint;

- La Fig. 5 est une vue partielle à plus grande échelle montrant la relation entre les gorges et le joint d'étanchéité.

En se référant à la Fig. l'une boîte d'emballage en fer blanc ou autre conteneur par exemple un camion à peinture, comprend un corps cylindrique 1 constitué de façon connue par une bande d'une tôle de fer blanc qui est fermée bord à bord par une couture longitudinale 2 suivant la technique connue actuellement de soudage par micro-points, et un fond 3 serti, de façon classique.

Le bord supérieur de la boîte est roulé vers l'extérieur comme représenté en 4, et la boîte peut être formée au moyen d'un couvercle 5 en métal, embouti, de forme circulaire et présentant une paroi cylindrique externe 6 ayant un diamètre à peu près égal au diamètre interne de l'ouverture de la boîte 1.

De façon connue le couvercle 5 comporte un bord roulé 7 et est adapté pour être engagé dans l'ouverture à la partie supérieure de la boîte 4.

Suivant un mode de réalisation de l'invention la boîte comporte dans sa paroi 8 deux gorges circulaires 9, 10 adjacentes, la gorge 9 étant adjacente au bord roulé 4 et la gorge 10 étant adjacente à la gorge 9 au-dessous de celle-ci par rapport au bord de la boîte, les deux gorges étant situées dans les limites de la zone de pénétration du couvercle, c'est-à-dire dans la région dans laquelle se produit un frottement entre la paroi de la boîte et le couvercle lors de la mise en place et de l'enlèvement de celui-ci.

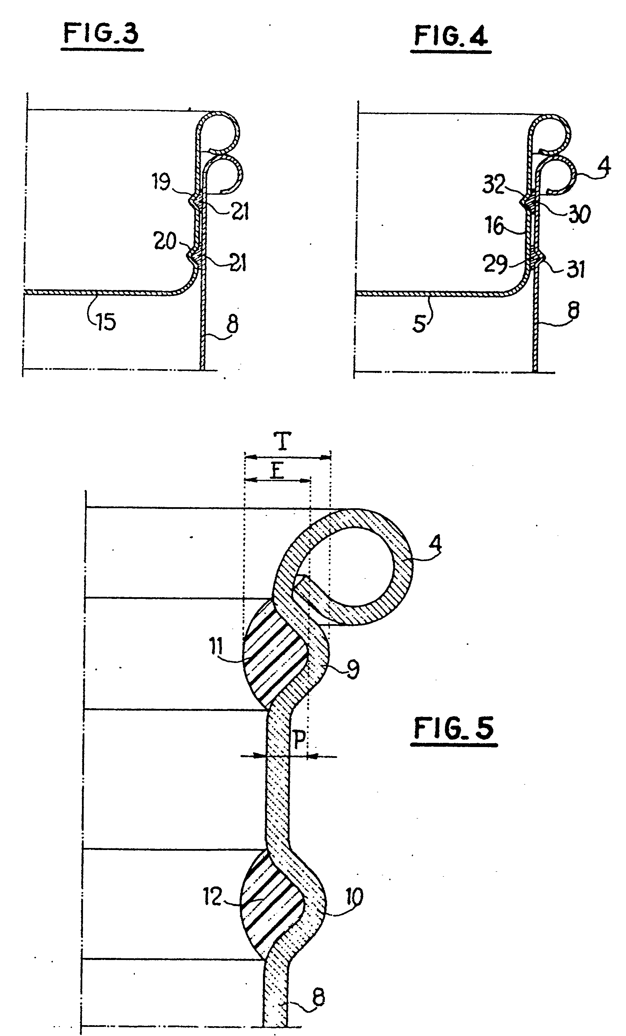

Dans chacune des gorges 9 et 10 est déposé un joint 11, 12 (Figure 5) respectivement, en une résine copolyamide synthétisée par polycondensation de mono et polyacides, avec polyamines aliphatiques et cycliques.

Ce joint réalisé dans une résine faisant partie de la famille ainsi définie, a la propriété d'adhérer très fortement au métal, et est déposé à chaud en faisant tourner la boîte sur elle-meme de façon à utiliser la force centrifuge pour répartir uniformément la resine, déposée sous forme d'un cordon dans le fond de la gorge.

Comme on l'a représenté à la Fig. 5, l'épaisseur totale de chaque joint 11, 12 est supérieure à la profondeur P de chaque gorge 9, 10, le joint en résine copolyamide faisant par conséquent saillie sur la surface cylindrique interne de la boîte 1 dans une porportion de 30 à 35/100 de mm par rapport à la profondeur P de la gorge.

L'adhérence de la résine polyamide sur le métal dans la gorge et la saillie formée par chaque joint sur la paroi 8 sont telles que lorsque le couvercle est mis en place, c'est-à-dire enfoncé à force dans l'ouverture de la boîte, chaque joint 11, 12 est légèrement déformé dans le sens de l'enfoncement, en raison du frottement, mais ne s'arrache pas de son logement, assurant ainsi une étanchéité parfaite entre la surface cylindrique externe du couvercle et la surface supérieure de chacun des joints 11, 12.

On remarquera en outre qu'en raison de la nature de la résine co-polyamide qui tend à adhérer à chaud sur le métal, l'étanchéité du dispositif se trouve encore renforcée si l'emballage fermé est soumis à une élévation de température.

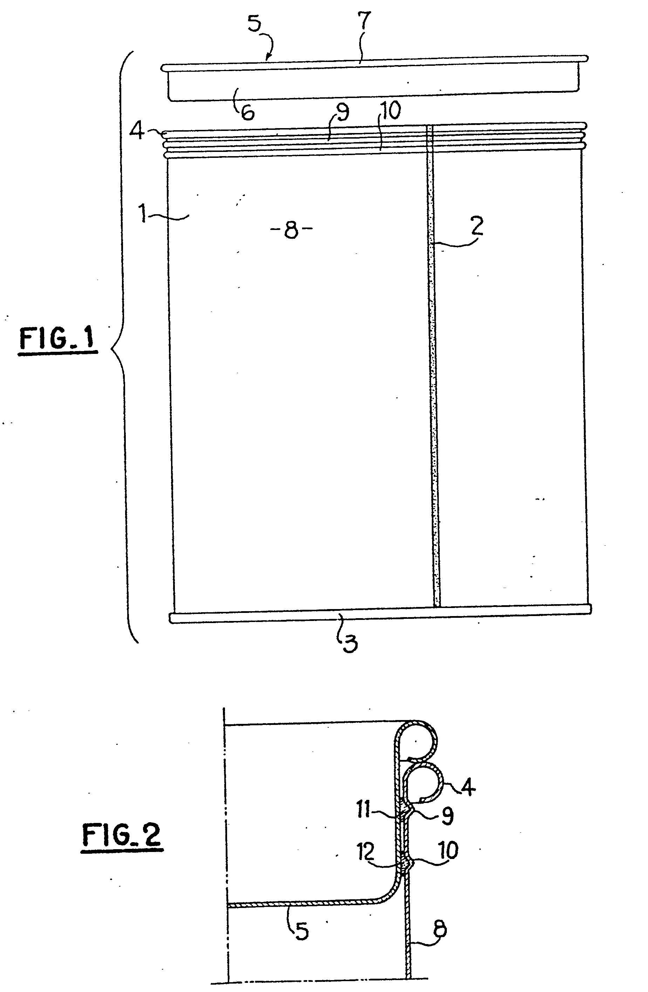

On a représenté à la Fig. 2 le couvercle 5 en place et l'on voit que chaque joint 11, 12 s'est légèrement déformé et aplati de part et d'autre de la gorge dans laquelle il est collé.

On a représenté à la Fig. 3 un second mode de réalisation de l'invention dans lequel des gorges 19, 20 sont formées dans la paroi cylindrique externe du couvercle 15, la région supérieure de la surface interne de la paroi 8 de la boîte étant dépourvue de gorge. Dans ce mode de réalisation un joint en résine co-polyamide 21 est déposé et collé dans chacune des gorges 19 et 20 du couvercle.

Suivant le mode de réalisation représenté à la Fig. 4, une première gorge 31 est formée dans la paroi 8 de la boîte 1, et une seconde gorge 32 est formée dans la paroi cylindrique externe 16 du couvercle 5, un joint 29, 30 en resine co-polyamide étant disposé dans chacune des gorges respectivement.

Dans chacun des exemples précités, la gorge la plus éloignée du bord de la boîte est située à l'intérieur de la limite de pénétration du couvercle dans la boîte, et la proportion entre l'épaisseur du joint en co-polyamide et la profondeur de gorge est analogue à celle représentée à la Fig. 5.

Pour déposer le joint en résine polyamide dans la ou les gorges ménagées dans la surface cylindrique externe du couvercle, on dispose celui-ci dans un support rotatif autour d'un axe horizontal de façon que ladite paroi cylindrique tourne dans un plan vertical. On dépose alors le joint en résine co-polyamide à chaud sous forme d'un cordon dans chaque gorge afin qu'il adhère. parfaitement au métal.

L'invention a également pour objet un procédé pour former et déposer un joint en résine co-polyamide dans une gorge ménagée dans une paroi d'une boîte d'emballage en métal ou dans la paroi cylindrique externe d'un couvercle métallique pour un tel emballage.

Pour déposer le joint en résine co-polyamide dans les gorges ménagées dans la surface interne de la paroi d'une boîte telle que 1, on fait tourner celle-ci autour de son axe avec une vitesse circonférentielle de 55 mètres/minute ± 2/1000, on chauffe ladite partie de paroi à une température donnée comprise entre 195°C et 205°C, on dépose un cordon de résine co-polyamide au moyen d'une buse ayant un orifice extrêmement fin, à une température comprise dans une plage de 215°C à 225°C en utilisant la force centrifuge pour répartir uniformément la résine dans chaque gorge.

Grâce à ce procédé, des cordons de résine polyamide très minces peuvent être collés dans leur gorge de logement respectif et leur surface externe présente une forme partiellement torique et parfaitement régulière.

En ce qui concerne les couvercles, après avoir disposé ceux-ci dans un support rotatif adapté pour le faire tourner autour d'un axe horizontal, on dèpose les cordons de résine dans les mêmes conditions de température relative de la résine et du couvercle en faisant tourner celui-ci dans un plan vertical, à la seule difference que l'on n'utilise pas dans ce cas la force centrifuge, la résine pénétrant normalement dans chaque gorge.

De nombreux essais ont démontré que des boîtes de ce type comportant un tel dispositif d'étanchéité présentaient une résistance élevée d'une part aux chocs et d'autre part à une exposition prolongée à la chaleur, dans le cas de produits ayant un fort pourcentage de dilatation, ce qui résoud le problème de l'ejection du couvercle dans les boîtes à ouverture totale.

**Revendications**

1 - Dispositif d'étanchéité pour emballage métallique cylindrique à ouverture totale, du type dans lequel un joint est logé dans une gorge de forme correspondante du couvercle ou de l'emballage et comprenant un conteneur et un couvercle embouti et dans lequel la surface périphérique interne de l'ouverture du conteneur, dépourvue de rebord radial interne, coopère directement avec la surface cylindrique externe dudit couvercle, caractérisé en ce qu'il comprend au moins un joint de forme partiellement torique (11, 12), realisé en une résine co-polyamide synthétisée par polycondensation de mono et polyacides, avec polyamines aliphatiques et cycliques, ce joint étant collé in-situ par dépôt à chaud dans au moins une gorge circulaire (2, 10) prévue dans la région du conteneur et/ou du couvercle dans laquelle se produit un frottement entre les parties coopérant ensemble de la paroi interne (8) de l'ouverture du conteneur et de la paroi périphérique externe du couvercle, lors de la mise en place et de l'enlèvement du couvercle (5).

2 - Dispositif suivant la revendication 1, cacaractérisé en ce que la surface interne de la paroi (8) du conteneur comporte dans ladite région de frottement deux gorges adjacentes (9, 10) contenant chacune un joint (11, 12).

3 - Dispositif suivant la revendication 1, caractérisé en ce qu'une première gorge (31) est formée dans la surface interne de la paroi (8) du conteneur et une seconde gorge (32) est formée dans la paroi cylindrique externe du couvercle (5), ladite seconde gorge (32) étant disposée de telle sorte qu'en position de fermeture de l'emballage la seconde gorge (32) se trouve entre la première gorge (31) et le bord externe de l'emballage.

4 - Procédé de fabrication d'un dispositif d'étanchéité pour emballage métallique selon l'une des revendications 1 à 3, caractérisé en ce qu'on dépose à chaud un cordon de ladite résine co-polyamide dans la (les) gorge (s) (9, 10) agencée (s) dans l'un et/ou l'autre des éléments de l'emballage préalablement chauffés à une température légèrement inférieure à celle de ladite résine et en faisant simultanément tourner ledit élément autour de son axe placé

7       **0 082 066**       8

horizontalement de façon que la (les) gorge (s) tourne (nt) dans un plan vertical.

## Patentansprüche

1. Abdichtvorrichtung für eine zylindrische metallische Verpackung mit vollständiger Öffnung von der Bauart, bei der eine Dichtung in eine Ringnut von entsprechender Form des Deckels oder der Verpackung eingesetzt ist und umfassend einen Behälter sowie einen tiefgezogenen Deckel und bei der die innere Umfangsfläche des Behälters frei von einem radialen inneren Rand ist und unmittelbar mit der äusseren zylindrischen Oberfläche des Deckels zusammenarbeitet,
dadurch <u>gekennzeichnet</u>,
daß sie wenigstens eine teilweise wulstförmige Dichtung (11, 12) aufweist, die aus einem Copolyamidharz hergestellt ist, das synthetisiert ist durch Polykondensation von Mono- und Polysäuren mit aliphatischen und cyclischen Aminen, wobei diese Dichtung in situ durch heißen Niederschlag in wenigstens eine kreisförmige Ringnut (2, 10) eingebettet ist, die in dem Bereich des Behälters und/oder des Deckels vorgesehen ist, in dem zwischen den zusammenarbeitenden Teilen der Innenwand (8) des Deckels des Behälters und der äußeren Umfangswand des Deckels beim Einsetzen und Entfernen des Deckels (5) Reibung entsteht.

2. Vorrichtung nach Anspruch 1,
dadurch <u>gekennzeichnet</u>,
daß die Innenfläche der Wand (8) des Behälters in diesem Reibungsbereich zwei benachbarte Ringnuten (9, 10) aufweist, die jeweils eine Dichtung (11, 12) enthalten.

3. Vorrichtung nach Anspruch 1,
dadurch <u>gekennzeichnet</u>,
daß in der Innenfläche der Wand (8) des Behälters eine erste Ringnut (11) und in der zylindrischen Außenwand des Deckels (5) eine zweite Ringnut (32) gebildet sind, wobei die zweite Ringnut (32) derart angeordnet ist, daß sich die zweite Ringnut (32) in der Schließstellung der Verpackung zwischen der ersten Ringnut (31) und dem äußer Rand der Verpackung befindet.

4. Verfahren zur Herstellung einer Abdichtvorrichtung für eine metallische Verpackung nach einem der Ansprüche 1 bis 3,
dadurch <u>gekennzeichnet</u>, daß man einen Strang des Co-Polyamidharzes in der (den) Ringnut (Ringnuten) aufträgt, die im einen oder anderen der Elemente der Verpackung ausgebildet ist (sind), die vorher auf eine Temperatur von ein wenig über derjenigen dieses Harzes erhitzt wurde, wobei gleichzeitig das Element um seine waagerecht angeordnete Achse derart gedreht wird, daß sich die Ringnut (Ringnuten) in einer senkrechten Ebene dreht (drehen).

## Claims

1. A sealing device for a cylindrical metal pack which is completely openable, of the type in which a sealing element is disposed in a groove of corresponding shape in the lid or the pack and comprising a container and a lid which are pressformed and in which the inner peripheral surface of the opening of the container, devoid of an inner radial flange, directly cooperates with the outer cylindrical surface of said lid, characterised in that it comprises at least one sealing element (11, 12) of partly toric shape made from a copolyamide resin synthetized by polycondensation of mono and polyacids, with aliphatic and cyclic polyamines, this sealing element being adhered in situ by deposit in the hot state in at least one circular groove (2, 10) provided in the region of the container and/ or the lid in which occurs friction between the cooperating parts of the inner wall (8) of the opening of the container and the outer peripheral wall of the lid, when the lid (5) is placed in position and removed.

2. A device according to claim 1, characterised in that the inner surface of the wall (8) of the container includes in said friction region two adjacent grooves (9, 10) each containing a sealing element (11, 12).

3. A device according to claim 1, characterised in that a first groove (31) is formed in the inner surface of the wall (8) of the container and a second groove (32) is formed in the outer cylindrical wall of the lid (5), said second groove (32) being disposed in such manner that, in the closed position of the pack, the second groove (32) is between the first groove (31) and the outer edge of the pack

4. A process for manufacturing a sealing device for a metal pack according to one of the claims 1 to 3, characterised in that it comprises disposing in the hot state a bead of said copolyamide resin in the groove(s) (9, 10) provided in one and/or the other of the elements of the pack previously heated to a temperature slightly lower than that of said resin, and rotating said element about its axis which is placed horizontally so that the groove(s) rotates or rotate in a vertical plane.

5

0 082 066

FIG.1

FIG.2

1

# FIG.3

19
21
20
21
15
8

# FIG.4

32
4
30
16
29
31
5
8

T
E

4
11
9
P
12
10
8

# FIG.5